# EUROPÄISCHE PATENTSCHRIFT

(11) **EP 4 100 498 B1**
(45) Veröffentlichungstag und Bekanntmachung des Hinweises auf die Patenterteilung: **10.04.2024**
(21) Anmeldenummer: 21703162.4
(22) Anmeldetag: 26.01.2021
(51) Int. Cl.: C11D 3/22, C11D 3/00, C11D 11/00, C08B 37/08

(54) **CHITOSANDERIVATE ALS SCHMUTZABLÖSEVERMÖGENDE WIRKSTOFFE**
CHITOSAN DERIVATIVES AS SOIL RELEASE AGENTS
DÉRIVÉS DE CHITOSANE EN TANT QU'AGENTS ANTI-SALISSURES

(30) Priorität: 04.02.2020 DE 102020201317
(43) Veröffentlichungstag der Anmeldung: 14.12.2022
(73) Patentinhaber: Henkel AG & Co. KGaA, 40589 Düsseldorf (DE)
(72) Erfinder: KROPF, Christian, 40724 Hilden (DE); GEBERT-SCHWARZWAELDER, Antje, 41469 Neuss (DE); JUNKES, Christa, 40595 Düsseldorf (DE); FALENSKI, Laura, 41466 Neuss (DE); HEINZE, Thomas, 07743 Jena (DE); GABRIEL, Lars, 07980 Berga/Elster (DE)
(86) Internationale Anmeldenummer: PCT/EP2021/051658
(87) Internationale Veröffentlichungsnummer: WO 2021/156093

(56) Entgegenhaltungen:
- EP-A1- 0 628 655
- EP-A1- 0 903 402
- EP-B1- 0 628 655
- WO-A1-2019/243108

## Beschreibung

Die vorliegende Erfindung betrifft die Verwendung bestimmter schmutzablösevermögender Wirkstoffe zur Verstärkung der Reinigungsleistung von Waschmitteln beim Waschen von Textilien.

Waschmittel enthalten neben den für den Waschprozess unverzichtbaren Inhaltsstoffen wie Tensiden und Buildermaterialien in der Regel weitere Bestandteile, die man unter dem Begriff Waschhilfsstoffe zusammenfassen kann und die so unterschiedliche Wirkstoffgruppen wie Schaumregulatoren, Vergrauungsinhibitoren, Bleichmittel, Bleichaktivatoren und Farbübertragungsinhibitoren umfassen. Zu derartigen Hilfsstoffen gehören auch Substanzen, welche der Wäschefaser schmutzabstoßende Eigenschaften verleihen und die, falls während des Waschvorgangs anwesend, das Schmutzablösevermögen der übrigen Waschmittelbestandteile unterstützen. Gleiches gilt sinngemäß auch für Reinigungsmittel für harte Oberflächen. Derartige schmutzablösevermögende Substanzen werden oft als "Soil Release"-Wirkstoffe oder wegen ihres Vermögens, die behandelte Oberfläche, zum Beispiel der Faser, schmutzabstoßend auszurüsten, als "Soil Repellents" bezeichnet. So ist beispielsweise aus dem US-amerikanischen Patent US 4 136 038 die schmutzablösevermögende Wirkung von Methylcellulose bekannt. Die europäische Patentanmeldung EP 0 213 729 offenbart die verringerte Redeposition bei Einsatz von Waschmitteln, die eine Kombination von Seife und nichtionischem Tensid mit Alkyl-Hydroxyalkyl-Cellulose enthalten. Aus der europäischen Patentanmeldung EP 0 213 730 sind Textilbehandlungsmittel bekannt, die kationische Tenside und nichtionische Celluloseether mit HLB-Werten von 3,1 bis 3,8 enthalten. Die US-amerikanische Patentschrift US 4 000 093 offenbart Waschmittel, die 0,1 Gew.-% bis 3 Gew.-% Alkyl-Cellulose, Hydroxyalkyl-Cellulose oder Alkyl-Hydroxyalkyl-Cellulose sowie 5 Gew.-% bis 50 Gew.-% Tensid enthalten, wobei die Tensidkomponente im Wesentlichen aus C₁₀- bis C₁₃-Alkylsulfat besteht und bis zu 5 Gew.-% C₁₄-Alkylsulfat und weniger als 5 Gew.-% Alkylsulfat mit Alkylresten von C₁₅ und höher aufweist. Beobachtet wird in Einzelfällen allerdings, dass die Wirkung derartiger Cellulosederivate in wasserhaltigen Flüssigwaschmitteln nach insbesondere längerer Lagerung unter ungünstigen Bedingungen nachlassen kann.

Wegen ihrer chemischen Ähnlichkeit zu Polyesterfasern bei Textilien aus diesem Material besonders wirksame schmutzablösevermögende Wirkstoffe sind Copolyester, die Dicarbonsäureeinheiten wie Terephthalsäure oder Sulfoisophthalsäure, Alkylenglykoleinheiten wie Ethylenglykol oder Propylenglykol und Polyalkylenglykoleinheiten wie Polyethylenglykol enthalten. Schmutzablösevermögende Copolyester der genannten Art wie auch ihr Einsatz in Waschmitteln sind seit langer Zeit bekannt.

Die aus dem Stand der Technik bekannten Polymere weisen den Nachteil auf, dass sie insbesondere bei Textilien, die nicht oder zumindest nicht zum überwiegenden Teil aus Polyester bestehen, keine oder nur unzureichende Wirksamkeit besitzen. Ein großer Teil der heutigen Textilien besteht aber aus Baumwolle oder Baumwoll-Polyester-Mischgeweben, so dass ein Bedarf nach bei insbesondere fettigen Anschmutzungen auf insbesondere derartigen Textilien besser wirksamen schmutzablösevermögenden Wirkstoffen besteht.

Aus der internationalen Patentanmeldung WO 2019/243108 A1 ist die Verwendung von N,O-substituierten Chitosanen zur Verstärkung der Reinigungsleistung von Waschmitteln bekannt.

Überraschenderweise wurde gefunden, dass Chitosanderivate, die lediglich Substituenten am N-Atom des Chitosan-Anhydroglukosidrings aufweisen, den daraus bekannten N,O-substituierten Chitosanen überlegen sind.

Gegenstand der Erfindung ist die Verwendung von Chitosanderivaten, die modifizierte Anhydroglukosideinheiten der allgemeinen Formel (I) enthalten, 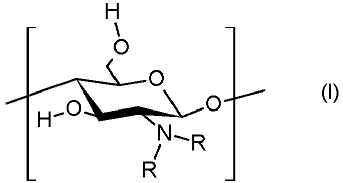 in denen die Reste R unabhängig voneinander für-H, -(CH₂)ₙCOOH, -(CH₂)ₙCOO⁻X⁺, -(CH₂)ₘSO₃H, -(CH₂)ₘSO₃⁻X⁺ stehen, n und m unabhängig voneinander für Zahlen von 1 bis 3 , vorzugsweise n für 1 und/oder m für 2, stehen, und X⁺ für ein ladungsausgleichendes Kation, insbesondere ein Alkalimetallion wie beispielsweise Natrium oder Kalium und/oder ein Ammoniumion steht, wobei zumindest ein Teil der Reste R nicht für -H steht-, zur Verstärkung der Reinigungsleistung von Waschmitteln beim Waschen von Textilien.

Chitosanderivate der allgemeinen Formel (I) sind durch reduktive Aminierung von ω-Oxocarbonsäuren (für R = -(CH₂)ₙCOOH, -(CH₂)ₙCOO⁻X⁺) mit Chitosan oder durch die Umsetzung von Chitosan mit ω-Halogenalkansulfonsäuren (für R = -(CH₂)ₘSO₃H, -(CH₂)ₘSO₃⁻X⁺) zugänglich, wie beispielsweise in H. Baumann und V. Faust "Concepts for improved regioselective placement of O-sulfo, N-sulfo, N-acetyl, and N-carboxymethyl groups in chitosan derivatives", Carbohydr. Res., 331 (2001), 43-57, von A. V. Pestov, Y. S. Petrova, A. V. Bukharova, L. K. Neudachina, O. V. Koryakova, E. G. Matochkina, und Yu. G. Yatluk, "Synthesis in a gel and sorption properties of N-2-sulfoethyl chitosan", Russ. J. Appl. Chem., 86 (2013), 269-272 und von Yu. S. Petrova, A. V. Bukharova, L. K. Neudachina, L. V. Adamova, O. V. Koryakova und A. V. Pestov, "Chemical properties of N-2-Sulfoethylchitosan with a medium degree of substitution", Polym. Sci. Ser. B, 56 (2014), 487-493 beschrieben.

Der durchschnittliche Substitutionsgrad (DS) bezogen auf den Anteil an Resten -NR₂, die nicht - NH₂ sind, liegt im erfindungsgemäß zu verwendenden Chitosanderivat vorzugsweise im Bereich von 0,1 bis 1,0, insbesondere von 0,2 bis 0,9. Der durchschnittliche Polymerisationsgrad (DPn) liegt im für die Herstellung der erfindungsgemäß zu verwendenden Chitosanderivate eingesetzten Chitosan vorzugsweise im Bereich von 100 bis 1200, vorzugsweise im Bereich von 200 bis 800. Unter den erfindungsgemäß zu verwendenden Chitosanderivaten sind solche mit einer zahlenmittleren Molmasse im Bereich von 5000 g/mol bis 150000 g/mol, insbesondere im Bereich von 30000 g/mol bis 110000 g/mol, zu bestimmen beispielsweise mittels Größenausschlusschromatographien (GPC, z.B. Eluent 0,08 M Na₂HPO₄, Fließrate 1 ml/min, System JASCO^{®}, Pumpe: PU-980, Detektor: RI-2031 Plus, Säule: PSS Novema 1000 und PSS Novema 30 in Reihe) und Pullulan als Kalibrierstandard, bevorzugt.

Vorzugsweise weist das Chitosanderivat keine weiteren Einheiten als die der allgemeinen Formel (I) auf.

Ein weiterer Gegenstand der Erfindung ist ein Verfahren zum Waschen von Textilien, bei dem ein Waschmittel und ein schmutzablösevermögender Wirkstoff in Form eines oben definierten Chitosanderivats zum Einsatz kommen. Diese Verfahren können manuell oder gegebenenfalls mit Hilfe einer üblichen Haushaltswaschmaschine ausgeführt werden. Dabei ist es möglich, das Waschmittel und den schmutzablösevermögenden Wirkstoff gleichzeitig oder nacheinander anzuwenden. Die gleichzeitige Anwendung lässt sich besonders vorteilhaft durch den Einsatz eines Waschmittels, welches den schmutzablösevermögenden Wirkstoff enthält, durchführen. Das Verfahren besteht im Wesentlichen darin, ein reinigungsbedürftiges Textil oder zumindest den verschmutzten Teil von dessen Oberfläche mit einer wässrigen Zubereitung in Kontakt zu bringen, die das oben definierte Chitosanderivat enthält, die wässrige Zubereitung eine gewisse Zeit auf das Textil oder zumindest den verschmutzten Teil von dessen Oberfläche einwirken zu lassen und die wässrige Zubereitung zu entfernen, beispielsweise durch Ausspülen des Textils mit Wasser.

Besonders ausgeprägt ist der Effekt des erfindungsgemäß zu verwendenden Wirkstoffs bei mehrfacher Anwendung, das heißt insbesondere zur Entfernung von Anschmutzungen von Textilien, die bereits bei Anwesenheit des Wirkstoffs gewaschen und/oder nachbehandelt worden waren, bevor sie mit der Anschmutzung versehen wurden. Im Zusammenhang mit der Nachbehandlung ist darauf hinzuweisen, dass sich der bezeichnete positive Aspekt auch durch ein Waschverfahren realisieren lässt, bei dem das Textil nach dem eigentlichen Waschvorgang, der mit Hilfe eines Waschmittels, welches einen genannten Wirkstoff enthalten kann, aber in diesem Fall auch frei von diesem sein kann, ausgeführt wird, mit einem Nachbehandlungsmittel, beispielsweise im Rahmen eines Weichspülschrittes, welches einen erfindungsgemäß zu verwendenden Wirkstoff enthält, in Gegenwart von Wasser in Kontakt gebracht wird. Auch bei dieser Vorgehensweise tritt beim nächsten Waschvorgang, auch wenn gewünschtenfalls abermals ein Waschmittel ohne einen erfindungsgemäß zu verwendenden Wirkstoff verwendet wird, der waschleistungsverstärkende Effekt der erfindungsgemäß zu verwendenden Wirkstoffe auf. Dieser ist deutlich höher als einer sich bei Einsatz eines herkömmlichen Soil Release-Wirkstoffs ergebender. In einer besonders bevorzugten Ausführungsform erfolgt hierbei die Zugabe des erfindungswesentlichen Wirkstoffs im Weichspülgang der insbesondere maschinellen Textilwäsche.

Der erfindungsgemäß verwendete Wirkstoff führt zu einer signifikant besseren Ablösung von insbesondere Fett- und Kosmetik-Anschmutzungen auf Textilien, insbesondere solchen aus Baumwolle beziehungsweise baumwollhaltigem Gewebe, als dies bei Verwendung bisher für diesen Zweck bekannter Verbindungen der Fall ist. Alternativ können bei gleichbleibendem Fettablösevermögen bedeutende Mengen an Tensiden eingespart werden.

Überdies wurde beobachtet, dass bei Anwesenheit der erfindungswesentlichen Cellulosederivate im Waschprozess eine geringere Wiederablagerung von bereits vom Textil abgelöstem Schmutz auf das gereinigte Textil stattfindet, so dass die in Gegenwart eines erfindungswesentlichen Chitosanderivats gewaschenen Textilien deutlich geringer vergrauen als solche, die in Abwesenheit des erfindungswesentlichen Chitosanderivats gewaschen wurden. Ein weiterer Gegenstand der Erfindung ist daher die Verwendung der oben definierten Chitosanderivate zur Reduzierung der Vergrauung von Textilien, insbesondere von Textilien, die aus Baumwolle bestehen oder Baumwolle enthalten, beim Waschen.

Die erfindungsgemäßen Verwendungen können im Rahmen eines Waschprozesses derart erfolgen, dass man den schmutzablösevermögenden Wirkstoff einer waschmittelmittelhaltigen Flotte zusetzt oder vorzugsweise den Wirkstoff als Bestandteil eines Waschmittels in die Flotte einbringt, die den zu reinigenden Gegenstand enthält oder die mit diesem in Kontakt gebracht wird.

Die erfindungsgemäße Verwendung im Rahmen eines Wäschenachbehandlungsverfahrens kann entsprechend derart erfolgen, dass man den schmutzablösevermögenden Wirkstoff der Spülflotte separat zusetzt, die nach dem unter Anwendung eines Waschmittels erfolgten Waschgang zum Einsatz kommt, oder es als Bestandteil des Wäschenachbehandlungsmittels, insbesondere eines Weichspülers, einbringt. Bei diesem Aspekt der Erfindung kann das vor dem Wäschenachbehandlungsmittel zum Einsatz kommende Waschmittel ebenfalls einen erfindungsgemäß zu verwendenden Wirkstoff enthalten, kann jedoch auch frei von diesem sein.

Weitere Gegenstände der Erfindung sind daher Waschmittel und Wäschenachbehandlungsmittel, die oben definierte Chitosanderivate enthalten.

Der Waschvorgang erfolgt vorzugsweise bei einer Temperatur von 15 °C bis 60 °C, besonders bevorzugt bei einer Temperatur von 20 °C bis 40 °C. Der Waschvorgang erfolgt weiterhin vorzugsweise bei einem pH-Wert von 6 bis 11, besonders bevorzugt bei einem pH-Wert von 7,5 bis 9,5. Die Einsatzkonzentration des Chitosanderivats in der Waschflotte beträgt vorzugsweise 0,0001 g/l bis 1 g/l, insbesondere 0,001 g/l bis 0,2 g/l.

Waschmittel, die einen erfindungsgemäß zu verwendenden Wirkstoff in Form des genannten Chitosanderivats enthalten oder mit diesem zusammen verwendet beziehungsweise in erfindungsgemäßen Verfahren eingesetzt werden, können alle üblichen sonstigen Bestandteile derartiger Mittel enthalten, die nicht in unerwünschter Weise mit dem erfindungswesentlichen Wirkstoff wechselwirken, insbesondere Tensid. Vorzugsweise wird der oben definierte Wirkstoff in Mengen von 0,01 Gew.-% bis 10 Gew.-%, besonders bevorzugt von 0,1 Gew.-% bis 3 Gew.-%, eingesetzt, wobei sich diese und die folgenden Mengenangaben auf das gesamte Mittel beziehen, wenn nicht anders angegeben. Vorzugsweise ist ein erfindungsgemäßes oder im erfindungsgemäßen Verfahren eingesetztes oder im Rahmen der erfindungsgemäßen Verwendung eingesetztes Mittel wasserhaltig und flüssig; es enthält insbesondere 2 Gew.% bis 92 Gew.-%, besonders bevorzugt 3 Gew.% bis 85 Gew.-% Wasser.

Überraschenderweise wurde gefunden, dass der erfindungsgemäß verwendete Wirkstoff die Wirkung bestimmter anderer Waschmittelinhaltsstoffe positiv beeinflusst und dass umgekehrt die Wirkung des Soil Release-Wirkstoffs durch bestimmte andere Waschmittelinhaltsstoffe noch zusätzlich verstärkt wird. Diese Effekte treten insbesondere bei Bleichmitteln, bei enzymatischen Wirkstoffen, insbesondere Proteasen und Lipasen, bei wasserlöslichen anorganischen und/oder organischen Buildern, insbesondere auf Basis oxidierter Kohlenhydrate oder polymeren Polycarboxylaten, bei synthetischen Aniontensiden vom Sulfat- und Sulfonattyp, und bei Farbübertragungsinhibitoren, beispielsweise Vinylpyrrolidon-, Vinylpyridin- oder Vinylimidazol-Polymeren oder -Copolymeren oder entsprechenden Polybetainen, auf, weshalb der Einsatz mindestens eines der genannten weiteren Inhaltsstoffe zusammen mit erfindungsgemäß zu verwendendem Wirkstoff bevorzugt ist.

Ein Mittel, welches einen erfindungsgemäß zu verwendenden Wirkstoff enthält oder mit diesem zusammen verwendet wird beziehungsweise im erfindungsgemäßen Verfahren zum Einsatz kommt, enthält vorzugsweise Bleichmittel auf Persauerstoffbasis, insbesondere in Mengen im Bereich von 3 Gew.-% bis 70 Gew.-%, sowie gegebenenfalls Bleichaktivator, insbesondere in Mengen im Bereich von 0,5 Gew.-% bis 10 Gew.-%, kann jedoch in einer anderen bevorzugten Ausführungsform auch frei von Bleichmittel und Bleichaktivator sein. Die in Betracht kommenden Bleichmittel sind vorzugsweise die in Waschmitteln in der Regel verwendeten Persauerstoffverbindungen wie Percarbonsäuren, beispielsweise Dodecandipersäure oder Phthaloylaminoperoxicapronsäure, Wasserstoffperoxid, Alkaliperborat, das als Tetra- oder Monohydrat vorliegen kann, Percarbonat, Perpyrophosphat und Persilikat, die in der Regel als Alkalisalze, insbesondere als Natriumsalze, vorliegen. Derartige Bleichmittel sind in Waschmitteln, welche einen erfindungsgemäß verwendeten Wirkstoff enthalten, vorzugsweise in Mengen bis zu 25 Gew.-%, insbesondere bis zu 15 Gew.-% und besonders bevorzugt von 3 Gew.-% bis 15 Gew.-%, jeweils bezogen auf gesamtes Mittel, vorhanden, wobei insbesondere Percarbonat zum Einsatz kommt. Die fakultativ vorhandene Komponente der Bleichaktivatoren umfasst die üblicherweise verwendeten N- oder O-Acylverbindungen, beispielsweise mehrfach acylierte Alkylendiamine, insbesondere Tetraacetylethylendiamin, acylierte Glykolurile, insbesondere Tetraacetylglykoluril, N-acylierte Hydantoine, Hydrazide, Triazole, Urazole, Diketopiperazine, Sulfurylamide und Cyanurate, außerdem Carbonsäureanhydride, insbesondere Phthalsäureanhydrid, Carbonsäureester, insbesondere Natriumisononanoylphenolsulfonat, und acylierte Zuckerderivate, insbesondere Pentaacetylglukose, sowie kationische Nitrilderivate wie Trimethylammoniumacetonitril-Salze. Die Bleichaktivatoren können zur Vermeidung der Wechselwirkung mit den Persauerstoffverbindungen bei der Lagerung in bekannter Weise mit Hüllsubstanzen überzogen beziehungsweise granuliert worden sein, wobei mit Hilfe von Carboxymethylcellulose granuliertes Tetraacetylethylendiamin mit gewichtsmittleren Korngrößen von 0,01 mm bis 0,8 mm, granuliertes 1 ,5-Diacetyl-2,4-dioxohexahydro-1 ,3,5-triazin, und/oder in Teilchenform konfektioniertes Trialkylammoniumacetonitril besonders bevorzugt ist. In Waschmitteln sind derartige Bleichaktivatoren vorzugsweise in Mengen bis zu 8 Gew.-%, insbesondere von 0,5 Gew.-% bis 6 Gew.-%, jeweils bezogen auf gesamtes Mittel, enthalten.

In einer bevorzugten Ausführungsform enthält ein erfindungsgemäß verwendetes oder im erfindungsgemäßen Verfahren eingesetztes Mittel nichtionisches Tensid, ausgewählt aus Fettalkylpolyglykosiden, Fettalkylpolyalkoxylaten, insbesondere-ethoxylaten und/oder-propoxylaten, Fettsäurepolyhydroxyamiden und/oder Ethoxylierungs- und/oder Propoxylierungsprodukten von Fettalkylaminen, vicinalen Diolen, Fettsäurealkylestern und/oder Fettsäureamiden sowie deren Mischungen, insbesondere in einer Menge im Bereich von 2 Gew.-% bis 25 Gew.-%.

Eine weitere Ausführungsform derartiger Mittel umfasst die Anwesenheit von synthetischem Aniontensid vom Sulfat- und/oder Sulfonattyp, insbesondere Fettalkylsulfat, Fettalkylethersulfat, Sulfofettsäureester und/oder Sulfofettsäuredisalze, insbesondere in einer Menge im Bereich von 2 Gew.-% bis 25 Gew.-%. Bevorzugt wird das Aniontensid aus den Alkyl- bzw. Alkenylsulfaten und/oder den Alkyl- bzw. Alkenylethersulfaten ausgewählt, in denen die Alkyl- bzw. Alkenylgruppe 8 bis 22, insbesondere 12 bis 18 C-Atome besitzt. Bei diesen handelt es sich üblicherweise nicht um Einzelsubstanzen, sondern um Schnitte oder Mischungen. Darunter sind solche bevorzugt, deren Anteil an Verbindungen mit längerkettigen Resten im Bereich von 16 bis 18 C-Atomen über 20 Gew.-% beträgt.

Zu den in Frage kommenden nichtionischen Tensiden gehören die Alkoxylate, insbesondere die Ethoxylate und/oder Propoxylate von gesättigten oder ein- bis mehrfach ungesättigten linearen oder verzweigtkettigen Alkoholen mit 10 bis 22 C-Atomen, vorzugsweise 12 bis 18 C-Atomen. Der Alkoxylierungsgrad der Alkohole liegt dabei in der Regel zwischen 1 und 20, vorzugsweise zwischen 3 und 10. Sie können in bekannter Weise durch Umsetzung der entsprechenden Alkohole mit den entsprechenden Alkylenoxiden hergestellt werden. Geeignet sind insbesondere die Derivate der Fettalkohole, obwohl auch deren verzweigtkettige Isomere, insbesondere sogenannte Oxoalkohole, zur Herstellung verwendbarer Alkoxylate eingesetzt werden können. Brauchbar sind demgemäß die Alkoxylate, insbesondere die Ethoxylate, primärer Alkohole mit linearen, insbesondere Dodecyl-, Tetradecyl-, Hexadecyl- oder Octadecyl-Resten sowie deren Gemische. Außerdem sind entsprechende Alkoxylierungsprodukte von Alkylaminen, vicinalen Diolen und Carbonsäureamiden, die hinsichtlich des Alkylteils den genannten Alkoholen entsprechen, verwendbar. Darüber hinaus kommen die Ethylenoxid- und/oder Propylenoxid-Insertionsprodukte von Fettsäurealkylestern sowie Fettsäurepolyhydroxyamide in Betracht. Zur Einarbeitung in die erfindungsgemäßen Mittel geeignete sogenannte Alkylpolyglykoside sind Verbindungen der allgemeinen Formel (G)ₙ-OR¹², in der R¹² einen Alkyl- oder Alkenylrest mit 8 bis 22 C-Atomen, G eine Glykoseeinheit und n eine Zahl zwischen 1 und 10 bedeuten. Bei der Glykosidkomponente (G)ₙ handelt es sich um Oligo- oder Polymere aus natürlich vorkommenden Aldose- oder Ketose-Monomeren, zu denen insbesondere Glucose, Mannose, Fruktose, Galaktose, Talose, Gulose, Altrose, Allose, Idose, Ribose, Arabinose, Xylose und Lyxose gehören. Die aus derartigen glykosidisch verknüpften Monomeren bestehenden Oligomere werden außer durch die Art der in ihnen enthaltenen Zucker durch deren Anzahl, den sogenannten Oligomerisierungsgrad, charakterisiert. Der Oligomerisierungsgrad n nimmt als analytisch zu ermittelnde Größe im allgemeinen gebrochene Zahlenwerte an; er liegt bei Werten zwischen 1 und 10, bei den vorzugsweise eingesetzten Glykosiden unter einem Wert von 1,5, insbesondere zwischen 1,2 und 1,4. Bevorzugter Monomer-Baustein ist wegen der guten Verfügbarkeit Glucose. Der Alkyl- oder Alkenylteil R¹² der Glykoside stammt bevorzugt ebenfalls aus leicht zugänglichen Derivaten nachwachsender Rohstoffe, insbesondere aus Fettalkoholen, obwohl auch deren verzweigtkettige Isomere, insbesondere sogenannte Oxoalkohole, zur Herstellung verwendbarer Glykoside eingesetzt werden können. Brauchbar sind demgemäß insbesondere die primären Alkohole mit linearen Octyl-, Decyl-, Dodecyl-, Tetradecyl-, Hexadecyl- oder Octadecylresten sowie deren Gemische. Besonders bevorzugte Alkylglykoside enthalten einen Kokosfettalkylrest, das heißt Mischungen mit im wesentlichen R¹²=Dodecyl und R¹²=Tetradecyl.

Nichtionisches Tensid ist in Mitteln, welche einen erfindungsgemäß verwendeten Soil Release-Wirkstoff enthalten, erfindungsgemäß verwendet oder im erfindungsgemäßen Verfahren eingesetzt werden, vorzugsweise in Mengen von 1 Gew.-% bis 30 Gew.-%, insbesondere von 1 Gew.-% bis 25 Gew.-% enthalten, wobei Mengen im oberen Teil dieses Bereiches eher in flüssigen Waschmitteln anzutreffen sind und teilchenförmige Waschmittel vorzugsweise eher geringere Mengen von bis zu 5 Gew.-% enthalten.

Die Mittel können stattdessen oder zusätzlich weitere Tenside, vorzugsweise synthetische Aniontenside des Sulfat- oder Sulfonat-Typs, wie beispielsweise Alkylbenzolsulfonate, in Mengen von vorzugsweise nicht über 20 Gew.-%, insbesondere von 0,1 Gew.-% bis 18 Gew.-%, jeweils bezogen auf gesamtes Mittel, enthalten. Als für den Einsatz in derartigen Mitteln besonders geeignete synthetische Aniontenside sind die Alkyl- und/oder Alkenylsulfate mit 8 bis 22 C-Atomen, die ein Alkali-, Ammonium- oder Alkyl- beziehungsweise Hydroxyalkyl-substituiertes Ammoniumion als Gegenkation tragen, zu nennen. Bevorzugt sind die Derivate der Fettalkohole mit insbesondere 12 bis 18 C-Atomen und deren verzweigtkettiger Analoga, der sogenannten Oxoalkohole. Die Alkyl- und Alkenylsulfate können in bekannter Weise durch Reaktion der entsprechenden Alkoholkomponente mit einem üblichen Sulfatierungsreagenz, insbesondere Schwefeltrioxid oder Chlorsulfonsäure, und anschließende Neutralisation mit Alkali-, Ammonium- oder Alkyl- beziehungsweise Hydroxyalkyl-substituierten Ammoniumbasen hergestellt werden. Zu den einsetzbaren Tensiden vom Sulfat-Typ gehören auch die sulfatierten Alkoxylierungsprodukte der genannten Alkohole, sogenannte Ethersulfate. Vorzugsweise enthalten derartige Ethersulfate 2 bis 30, insbesondere 4 bis 10 Ethylenglykol-Gruppen pro Molekül. Zu den geeigneten Aniontensiden vom Sulfonat-Typ gehören die durch Umsetzung von Fettsäureestern mit Schwefeltrioxid und anschließender Neutralisation erhältlichen α-Sulfoester, insbesondere die sich von Fettsäuren mit 8 bis 22 C-Atomen, vorzugsweise 12 bis 18 C-Atomen, und linearen Alkoholen mit 1 bis 6 C-Atomen, vorzugsweise 1 bis 4 C-Atomen, ableitenden Sulfonierungsprodukte, sowie die durch formale Verseifung aus diesen hervorgehenden Sulfofettsäuren.

Als weitere fakultative tensidische Inhaltsstoffe kommen Seifen in Betracht, wobei gesättigte Fettsäureseifen, wie die Salze der Laurinsäure, Myristinsäure, Palmitinsäure oder Stearinsäure, sowie aus natürlichen Fettsäuregemischen, zum Beispiel Kokos-, Palmkern- oder Talgfettsäuren, abgeleitete Seifen geeignet sind. Insbesondere sind solche Seifengemische bevorzugt, die zu 50 Gew.-% bis 100 Gew.-% aus gesättigten C₁₂-C₁₈-Fettsäureseifen und zu bis 50 Gew.-% aus Ölsäureseife zusammengesetzt sind. Vorzugsweise ist Seife in Mengen von 0,1 Gew.-% bis 5 Gew.-% enthalten. Insbesondere in flüssigen Mitteln, welche ein erfindungsgemäß verwendetes Polymer enthalten, können jedoch auch höhere Seifenmengen von in der Regel bis zu 20 Gew.-% enthalten sein.

Gewünschtenfalls können die Mittel auch Betaine und/oder kationische Tenside enthalten, die - falls vorhanden - vorzugsweise in Mengen von 0,5 Gew.-% bis 7 Gew.-% eingesetzt werden. Unter diesen sind die unten diskutierten Esterquats besonders bevorzugt.

In einer weiteren Ausführungsform enthält das Mittel wasserlöslichen und/oder wasserunlöslichen Builder, insbesondere ausgewählt aus Alkalialumosilikat, kristallinem Alkalisilikat mit Modul über 1, monomerem Polycarboxylat, polymerem Polycarboxylat und deren Mischungen, insbesondere in Mengen im Bereich von 2,5 Gew.-% bis 60 Gew.-%.

Das Mittel enthält vorzugsweise 20 Gew.-% bis 55 Gew.-% wasserlöslichen und/oder wasserunlöslichen, organischen und/oder anorganischen Builder. Zu den wasserlöslichen organischen Buildersubstanzen gehören insbesondere solche aus der Klasse der Polycarbonsäuren, insbesondere Citronensäure und Zuckersäuren, sowie der polymeren (Poly-)carbonsäuren, insbesondere die durch Oxidation von Polysacchariden zugänglichen Polycarboxylate, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättigter Carbonsäuren liegt im Allgemeinen zwischen 5000 g/mol und 200000 g/mol, die der Copolymeren zwischen 2000 g/mol und 200000 g/mol, vorzugsweise 50000 g/mol bis 120000 g/mol, bezogen auf freie Säure. Ein besonders bevorzugtes Acrylsäure-Maleinsäure-Copolymer weist eine relative Molekülmasse von 50000 g/mol bis 100000 g/mol auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei Carbonsäuren und/oder deren Salze sowie als drittes Monomer Vinylalkohol und/oder ein Vinylalkohol-Derivat oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure, insbesondere von (Meth-)acrylsäure ab. Das zweite saure Monomer beziehungsweise dessen Salz kann ein Derivat einer C₄-C₈-Dicarbonsäure sein, wobei Maleinsäure besonders bevorzugt ist. Die dritte monomere Einheit wird in diesem Fall von Vinylalkohol und/oder vorzugsweise einem veresterten Vinylalkohol gebildet. Insbesondere sind Vinylalkohol-Derivate bevorzugt, welche einen Ester aus kurzkettigen Carbonsäuren, beispielsweise von C₁-C₄-Carbonsäuren, mit Vinylalkohol darstellen. Bevorzugte Terpolymere enthalten dabei 60 Gew.-% bis 95 Gew.-%, insbesondere 70 Gew.-% bis 90 Gew.-% (Meth)acrylsäure bzw. (Meth)acrylat, besonders bevorzugt Acrylsäure oder Acrylat, und Maleinsäure oder Maleinat sowie 5 Gew.-% bis 40 Gew.-%, vorzugsweise 10 Gew.-% bis 30 Gew.-% Vinylalkohol und/oder Vinylacetat. Ganz besonders bevorzugt sind dabei Terpolymere, in denen das Gewichtsverhältnis (Meth)acrylsäure beziehungsweise (Meth)acrylat zu Maleinsäure beziehungsweise Maleat zwischen 1:1 und 4:1, vorzugsweise zwischen 2:1 und 3:1 und insbesondere 2:1 und 2,5:1 liegt. Dabei sind sowohl die Mengen als auch die Gewichtsverhältnisse auf die Säuren bezogen. Das zweite saure Monomer beziehungsweise dessen Salz kann auch ein Derivat einer Allylsulfonsäure sein, die in 2-Stellung mit einem Alkylrest, vorzugsweise mit einem C₁-C₄-Alkylrest, oder einem aromatischen Rest, der sich vorzugsweise von Benzol oder Benzol-Derivaten ableitet, substituiert ist. Bevorzugte Terpolymere enthalten dabei 40 Gew.-% bis 60 Gew.-%, insbesondere 45 bis 55 Gew.-% (Meth)acrylsäure beziehungsweise (Meth)acrylat, besonders bevorzugt Acrylsäure beziehungsweise Acrylat, 10 Gew.-% bis 30 Gew.-%, vorzugsweise 15 Gew.-% bis 25 Gew.-% Methallylsulfonsäure bzw. Methallylsulfonat und als drittes Monomer 15 Gew.-% bis 40 Gew.-%, vorzugsweise 20 Gew.-% bis 40 Gew.-% eines Kohlenhydrats. Dieses Kohlenhydrat kann dabei beispielsweise ein Mono-, Di-, Oligo- oder Polysaccharid sein, wobei Mono-, Di- oder Oligosaccharide bevorzugt sind, besonders bevorzugt ist Saccharose. Durch den Einsatz des dritten Monomers werden vermutlich Sollbruchstellen in dem Polymer eingebaut, die für die gute biologische Abbaubarkeit des Polymers verantwortlich sind. Diese Terpolymere weisen im Allgemeinen eine relative Molekülmasse zwischen 1000 g/mol und 200000 g/mol, vorzugsweise zwischen 3000 g/mol und 10000 g/mol auf. Sie können, insbesondere zur Herstellung flüssiger Mittel, in Form wässriger Lösungen, vorzugsweise in Form 30- bis 50-gewichtsprozentiger wässriger Lösungen eingesetzt werden. Alle genannten Polycarbonsäuren werden in der Regel in Form ihrer wasserlöslichen Salze, insbesondere ihre Alkalisalze, eingesetzt.

Derartige organische Buildersubstanzen sind vorzugsweise in Mengen bis zu 40 Gew.-%, insbesondere bis zu 25 Gew.-% und besonders bevorzugt von 1 Gew.-% bis 5 Gew.-% enthalten. Mengen nahe der genannten Obergrenze werden vorzugsweise in pastenförmigen oder flüssigen, insbesondere wasserhaltigen, Mitteln eingesetzt.

Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Alumosilikate in Waschmittelqualität, insbesondere Zeolith NaA und gegebenenfalls NaX, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 mm auf und bestehen vorzugsweise zu wenigstens 80 Gew.-% aus Teilchen mit einer Größe unter 10 mm. Ihr Calciumbindevermögen, das nach den Angaben der deutschen Patentschrift DE 24 12 837 bestimmt werden kann, liegt im Bereich von 100 bis 200 mg CaO pro Gramm. Geeignete Substitute beziehungsweise Teilsubstitute für das genannte Alumosilikat sind kristalline Alkalisilikate, die allein oder im Gemisch mit amorphen Silikaten vorliegen können. Die in den Mitteln als Gerüststoffe brauchbaren Alkalisilikate weisen vorzugsweise ein molares Verhältnis von Alkalioxid zu SiOz unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis NazO:SiOz von 1:2 bis 1:2,8. Derartige amorphe Alkalisilikate sind beispielsweise unter dem Namen Portil^{®} im Handel erhältlich. Sie werden im Rahmen der Herstellung bevorzugt als Feststoff und nicht in Form einer Lösung zugegeben. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁ yH₂O eingesetzt, in der x, das sogenannte Modul, eine Zahl von 1,9 bis 4 und y eine Zahl von 0 bis 20 ist und bevorzugte Werte für × 2, 3 oder 4 sind. Bevorzugte kristalline Schichtsilikate sind solche, bei denen x in der genannten allgemeinen Formel die Werte 2 oder 3 annimmt. Insbesondere sind sowohl β- als auch δ-Natriumdisilikate (Na₂Si₂O₅·yH₂O) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können in Mitteln, welche einen erfindungsgemäß zu verwendenden Wirkstoff enthalten, eingesetzt werden. In einer weiteren bevorzugten Ausführungsform erfindungsgemäßer Mittel wird ein kristallines Natriumschichtsilikat mit einem Modul von 2 bis 3 eingesetzt, wie es aus Sand und Soda hergestellt werden kann. Kristalline Natriumsilikate mit einem Modul im Bereich von 1,9 bis 3,5, werden in einer weiteren bevorzugten Ausführungsform von Waschmitteln, welche einen erfindungsgemäß verwendeten Wirkstoff enthalten, eingesetzt. Deren Gehalt an Alkalisilikaten beträgt vorzugsweise 1 Gew.-% bis 50 Gew.-% und insbesondere 5 Gew.-% bis 35 Gew.-%, bezogen auf wasserfreie Aktivsubstanz. Falls als zusätzliche Buildersubstanz auch Alkalialumosilikat, insbesondere Zeolith, vorhanden ist, beträgt der Gehalt an Alkalisilikat vorzugsweise 1 Gew.-% bis 15 Gew.-% und insbesondere 2 Gew.-% bis 9 Gew.-%, bezogen auf wasserfreie Aktivsubstanz. Das Gewichtsverhältnis Alumosilikat zu Silikat, jeweils bezogen auf wasserfreie Aktivsubstanzen, beträgt dann vorzugsweise 4:1 bis 10:1. In Mitteln, die sowohl amorphe als auch kristalline Alkalisilikate enthalten, beträgt das Gewichtsverhältnis von amorphem Alkalisilikat zu kristallinem Alkalisilikat vorzugsweise 1:2 bis 2:1 und insbesondere 1:1 bis 2:1.

Zusätzlich zum genannten anorganischen Builder können weitere wasserlösliche oder wasserunlösliche anorganische Substanzen in den Mitteln, welche einen erfindungsgemäß zu verwendenden Wirkstoff enthalten, mit diesem zusammen verwendet beziehungsweise in erfindungsgemäßen Verfahren eingesetzt werden, enthalten sein. Geeignet sind in diesem Zusammenhang die Alkalicarbonate, Alkalihydrogencarbonate und Alkalisulfate sowie deren Gemische. Derartiges zusätzliches anorganisches Material kann in Mengen bis zu 70 Gew.-% vorhanden sein.

Zusätzlich können die Mittel weitere in Wasch- und Reinigungsmitteln übliche Bestandteile enthalten. Zu diesen fakultativen Bestandteilen gehören insbesondere Enzyme, Enzymstabilisatoren, Komplexbildner für Schwermetalle, beispielsweise Aminopolycarbonsäuren, Aminohydroxypolycarbonsäuren, Polyphosphonsäuren und/oder Aminopolyphosphonsäuren, Schauminhibitoren, beispielsweise Organopolysiloxane oder Paraffine, Lösungsmittel und optische Aufheller, beispielsweise Stilbendisulfonsäurederivate. Vorzugsweise sind in Mitteln, welche einen erfindungsgemäß verwendeten Wirkstoff enthalten, bis zu 1 Gew.-%, insbesondere 0,01 Gew.-% bis 0,5 Gew.-% optische Aufheller, insbesondere Verbindungen aus der Klasse der substituierten 4,4'-Bis-(2,4,6-triamino-s-triazinyl)-stilben-2,2'-disulfonsäuren, bis zu 5 Gew.-%, insbesondere 0,1 Gew.-% bis 2 Gew.-% Komplexbildner für Schwermetalle, insbesondere Aminoalkylenphosphonsäuren und deren Salze und bis zu 2 Gew.-%, insbesondere 0,1 Gew.-% bis 1 Gew.-% Schauminhibitoren enthalten, wobei sich die genannten Gewichtsanteile jeweils auf gesamtes Mittel beziehen.

Lösungsmittel, die insbesondere bei flüssigen Mitteln eingesetzt werden können, sind neben Wasser vorzugsweise solche, die wassermischbar sind. Zu diesen gehören die niederen Alkohole, beispielsweise Ethanol, Propanol, iso-Propanol, und die isomeren Butanole, Glycerin, niedere Glykole, beispielsweise Ethylen- und Propylenglykol, und die aus den genannten Verbindungsklassen ableitbaren Ether. In derartigen flüssigen Mitteln liegen die erfindungsgemäß verwendeten Wirkstoffe in der Regel gelöst oder in suspendierter Form vor.

Gegebenenfalls anwesende Enzyme werden vorzugsweise aus der Gruppe umfassend Protease, Amylase, Lipase, Cellulase, Hemicellulase, Oxidase, Peroxidase oder Mischungen aus diesen ausgewählt. In erster Linie kommt aus Mikroorganismen, wie Bakterien oder Pilzen, gewonnene Protease in Frage. Sie kann in bekannter Weise durch Fermentationsprozesse aus geeigneten Mikroorganismen gewonnen werden. Proteasen sind im Handel beispielsweise unter den Namen BLAP^{®}, Savinase^{®}, Esperase^{®}, Maxatase^{®}, Optimase^{®}, Alcalase^{®}, Durazym^{®} oder Maxapem^{®} erhältlich. Die einsetzbare Lipase kann beispielsweise aus Humicola lanuginosa, aus Bacillus-Arten, aus Pseudomonas-Arten, aus Fusarium-Arten, aus Rhizopus-Arten oder aus Aspergillus-Arten gewonnen werden. Geeignete Lipasen sind beispielsweise unter den Namen Lipolase^{®}, Lipozym^{®}, Lipomax^{®}, Lipex^{®}, Amano^{®}-Lipase, Toyo-Jozo^{®}-Lipase, Meito^{®}-Lipase und Diosynth^{®}-Lipase im Handel erhältlich. Geeignete Amylasen sind beispielsweise unter den Namen Maxamyl^{®}, Termamyl^{®}, Duramyl^{®} und Purafect^{®} OxAm handelsüblich. Die einsetzbare Cellulase kann ein aus Bakterien oder Pilzen gewinnbares Enzym sein, welches ein pH-Optimum vorzugsweise im schwach sauren bis schwach alkalischen Bereich von 6 bis 9,5 aufweist. Derartige Cellulasen sind unter den Namen Celluzyme^{®}, Carezyme^{®} und Ecostone^{®} handelsüblich.

Zu den gegebenenfalls, insbesondere in flüssigen Mitteln vorhandenen üblichen Enzymstabilisatoren gehören Aminoalkohole, beispielsweise Mono-, Di-, Triethanol- und -propanolamin und deren Mischungen, niedere Carbonsäuren, Borsäure beziehungsweise Alkaliborate, Borsäure-Carbonsäure-Kombinationen, Borsäureester, Boronsäurederivate, Calciumsalze, beispielsweise Ca-Ameisensäure-Kombination, Magnesiumsalze, und/oder schwefelhaltige Reduktionsmittel.

Zu den geeigneten Schauminhibitoren gehören langkettige Seifen, insbesondere Behenseife, Fettsäureamide, Paraffine, Wachse, Mikrokristallinwachse, Organopolysiloxane und deren Gemische, die darüber hinaus mikrofeine, gegebenenfalls silanierte oder anderweitig hydrophobierte Kieselsäure enthalten können. Zum Einsatz in partikelförmigen Mitteln sind derartige Schauminhibitoren vorzugsweise an granulare, wasserlösliche Trägersubstanzen gebunden.

In einer bevorzugten Ausführungsform ist ein Mittel, in das erfindungsgemäß zu verwendender Wirkstoff eingearbeitet wird, teilchenförmig und enthält bis zu 25 Gew.-%, insbesondere 4 Gew.-% bis 20 Gew.-% Bleichmittel, insbesondere Alkalipercarbonat, bis zu 15 Gew.-%, insbesondere 1 Gew.-% bis 10 Gew.-% Bleichaktivator, 20 Gew.-% bis 55 Gew.-% anorganischen Builder, bis zu 10 Gew.-%, insbesondere 2 Gew.-% bis 8 Gew.-% wasserlöslichen organischen Builder, 10 Gew.-% bis 25 Gew.-% synthetisches Aniontensid, 1 Gew.-% bis 5 Gew.-% nichtionisches Tensid und bis zu 25 Gew.-%, insbesondere 0,1 Gew.-% bis 25 Gew.-% anorganische Salze, insbesondere Alkalicarbonat und/oder -hydrogencarbonat.

In einer weiteren bevorzugten Ausführungsform ist ein Mittel, in das erfindungsgemäß zu verwendender Wirkstoff eingearbeitet wird, flüssig und enthält 1 Gew.-% bis 25 Gew.-%, insbesondere 5 Gew.-% bis 15 Gew.-% nichtionisches Tensid, bis zu 10 Gew.-%, insbesondere 0,5 Gew.-% bis 8 Gew.-% synthetisches Aniontensid, 3 Gew.-% bis 15 Gew.-%, insbesondere 5 Gew.-% bis 10 Gew.-% Seife, 0,5 Gew.-% bis 5 Gew.-%, insbesondere 1 Gew.-% bis 4 Gew.-% organischen Builder, insbesondere Polycarboxylat wie Citrat, bis zu 1,5 Gew.-%, insbesondere 0,1 Gew.-% bis 1 Gew.-% Komplexbildner für Schwermetalle, wie Phosphonat, und neben gegebenenfalls enthaltenem Enzym, Enzymstabilisator, Farb- und/oder Duftstoff Wasser und/oder wassermischbares Lösungsmittel.

Möglich ist auch die Verwendung einer Kombination aus einem erfindungswesentlichen schmutzablösevermögenden Wirkstoff mit einem schmutzablösevermögenden Polymer aus einer Dicarbonsäure und einem gegebenenfalls polymeren Diol zur Verstärkung der Reinigungsleistung von Waschmitteln beim Waschen von Textilien. Auch im Rahmen erfindungsgemäßer Mittel und des erfindungsgemäßen Verfahrens sind solche Kombinationen mit einem insbesondere polyesteraktiven schmutzablösevermögenden Polymer möglich.

Zu den bekanntlich polyesteraktiven schmutzablösevermögenden Polymeren, die zusätzlich zu den erfindungswesentlichen Wirkstoffen eingesetzt werden können, gehören Copolyester aus Dicarbonsäuren, beispielsweise Adipinsäure, Phthalsäure oder Terephthalsäure, Diolen, beispielsweise Ethylenglykol oder Propylenglykol, und Polydiolen, beispielsweise Polyethylenglykol oder Polypropylenglykol. Zu den bevorzugt eingesetzten schmutzablösevermögenden Polyestern gehören solche Verbindungen, die formal durch Veresterung zweier Monomerteile zugänglich sind, wobei das erste Monomer eine Dicarbonsäure HOOC-Ph-COOH und das zweite Monomer ein Diol HO-(CHR¹¹-)ₐOH, das auch als polymeres Diol H-(O-(CHR¹¹-)ₐ)_{b}OH vorliegen kann, ist. Darin bedeutet Ph einen o-, m- oder p-Phenylenrest, der 1 bis 4 Substituenten, ausgewählt aus Alkylresten mit 1 bis 22 C-Atomen, Sulfonsäuregruppen, Carboxylgruppen und deren Mischungen, tragen kann, R¹¹ Wasserstoff, einen Alkylrest mit 1 bis 22 C-Atomen und deren Mischungen, a eine Zahl von 2 bis 6 und b eine Zahl von 1 bis 300. Vorzugsweise liegen in den aus diesen erhältlichen Polyestern sowohl Monomerdioleinheiten -O-(CHR¹¹-)ₐO- als auch Polymerdioleinheiten -(O-(CHR¹¹-)ₐ)_{b}O- vor. Das molare Verhältnis von Monomerdioleinheiten zu Polymerdioleinheiten beträgt vorzugsweise 100:1 bis 1:100, insbesondere 10:1 bis 1:10. In den Polymerdioleinheiten liegt der Polymerisationsgrad b vorzugsweise im Bereich von 4 bis 200, insbesondere von 12 bis 140. Das Molekulargewicht beziehungsweise das mittlere Molekulargewicht oder das Maximum der Molekulargewichtsverteilung bevorzugter schmutzablösevermögender Polyester liegt im Bereich von 250 g/mol bis 100 000 g/mol, insbesondere von 500 g/mol bis 50 000 g/mol. Die dem Rest Ph zugrundeliegende Säure wird vorzugsweise aus Terephthalsäure, Isophthalsäure, Phthalsäure, Trimellithsäure, Mellithsäure, den Isomeren der Sulfophthalsäure, Sulfoisophthalsäure und Sulfoterephthalsäure sowie deren Gemischen ausgewählt. Sofern deren Säuregruppen nicht Teil der Esterbindungen im Polymer sind, liegen sie vorzugsweise in Salzform, insbesondere als Alkali- oder Ammoniumsalz vor. Unter diesen sind die Natrium- und Kaliumsalze besonders bevorzugt. Gewünschtenfalls können statt des Monomers HOOC-Ph-COOH geringe Anteile, insbesondere nicht mehr als 10 Mol-% bezogen auf den Anteil an Ph mit der oben gegebenen Bedeutung, anderer Säuren, die mindestens zwei Carboxylgruppen aufweisen, im schmutzablösevermögenden Polyester enthalten sein. Zu diesen gehören beispielsweise Alkylen- und Alkenylendicarbonsäuren wie Malonsäure, Bernsteinsäure, Fumarsäure, Maleinsäure, Glutarsäure, Adipinsäure, Pimelinsäure, Korksäure, Azelainsäure und Sebacinsäure. Zu den bevorzugten Diolen HO-(CHR¹¹-)ₐOH gehören solche, in denen R¹¹ Wasserstoff und a eine Zahl von 2 bis 6 ist, und solche, in denen a den Wert 2 aufweist und R¹¹ unter Wasserstoff und den Alkylresten mit 1 bis 10, insbesondere 1 bis 3 C-Atomen ausgewählt wird. Unter den letztgenannten Diolen sind solche der Formel HO-CH₂-CHR¹¹-OH, in der R¹¹ die obengenannte Bedeutung besitzt, besonders bevorzugt. Beispiele für Diolkomponenten sind Ethylenglykol, 1,2-Propylenglykol, 1,3-Propylenglykol, 1,4-Butandiol, 1,5-Pentandiol, 1,6-Hexandiol, 1,8-Octandiol, 1,2-Decandiol, 1,2-Dodecandiol und Neopentylglykol. Besonders bevorzugt unter den polymeren Diolen ist Polyethylenglykol mit einer mittleren Molmasse im Bereich von 1000 g/mol bis 6000 g/mol.

Gewünschtenfalls können diese wie oben beschrieben zusammengesetzten Polyester auch endgruppenverschlossen sein, wobei als Endgruppen Alkylgruppen mit 1 bis 22 C-Atomen und Ester von Monocarbonsäuren in Frage kommen. Den über Esterbindungen gebundenen Endgruppen können Alkyl-, Alkenyl- und Arylmonocarbonsäuren mit 5 bis 32 C-Atomen, insbesondere 5 bis 18 C-Atomen, zugrunde liegen. Zu diesen gehören Valeriansäure, Capronsäure, Önanthsäure, Caprylsäure, Pelargonsäure, Caprinsäure, Undecansäure, Undecensäure, Laurinsäure, Lauroleinsäure, Tridecansäure, Myristinsäure, Myristoleinsäure, Pentadecansäure, Palmitinsäure, Stearinsäure, Petroselinsäure, Petroselaidinsäure, Ölsäure, Linolsäure, Linolaidinsäure, Linolensäure, Eläostearinsäure, Arachinsäure, Gadoleinsäure, Arachidonsäure, Behensäure, Erucasäure, Brassidinsäure, Clupanodonsäure, Lignocerinsäure, Cerotinsäure, Melissinsäure, Benzoesäure, die 1 bis 5 Substituenten mit insgesamt bis zu 25 C-Atomen, insbesondere 1 bis 12 C-Atomen tragen kann, beispielsweise tert.-Butylbenzoesäure. Den Endgruppen können auch Hydroxymonocarbonsäuren mit 5 bis 22 C-Atomen zugrunde liegen, zu denen beispielsweise Hydroxyvaleriansäure, Hydroxycapronsäure, Ricinolsäure, deren Hydrierungsprodukt Hydroxystearinsäure sowie o-, m- und p-Hydroxybenzoesäure gehören. Die Hydroxymonocarbonsäuren können ihrerseits über ihre Hydroxylgruppe und ihre Carboxylgruppe miteinander verbunden sein und damit mehrfach in einer Endgruppe vorliegen. Vorzugsweise liegt die Anzahl der Hydroxymonocarbonsäureeinheiten pro Endgruppe, das heißt ihr Oligomerisierungsgrad, im Bereich von 1 bis 50, insbesondere von 1 bis 10. In einer bevorzugten Ausgestaltung der Erfindung werden Polymere aus Ethylenterephthalat und Polyethylenoxid-terephthalat, in denen die Polyethylenglykol-Einheiten Molgewichte von 750 bis 5000 aufweisen und das Molverhältnis von Ethylenterephthalat zu Polyethylenoxid-terephthalat 50:50 bis 90:10 beträgt, in Kombination mit Kombination mit einem erfindungswesentlichen Wirkstoff verwendet.

Die polyesteraktiven schmutzablösevermögenden Polymere sind vorzugsweise wasserlöslich, wobei unter dem Begriff "wasserlöslich" eine Löslichkeit von mindestens 0,01 g, vorzugsweise mindestens 0,1 g des Polymers pro Liter Wasser bei Raumtemperatur und pH 8 verstanden werden soll. Bevorzugt eingesetzte Polymere weisen unter diesen Bedingungen jedoch eine Löslichkeit von mindestens 1 g pro Liter, insbesondere mindestens 10 g pro Liter auf.

Bevorzugte Wäschenachbehandlungsmittel, die einen erfindungsgemäß zu verwendenden Wirkstoff enthalten, weisen als wäscheweichmachenden Wirkstoff ein sogenanntes Esterquat auf, das heißt einen quaternierten Ester aus Carbonsäure und Aminoalkohol. Dabei handelt es sich um bekannte Stoffe, die man nach den einschlägigen Methoden der präparativen organischen Chemie erhalten kann, beispielsweise indem man Triethanolamin in Gegenwart von unterphosphoriger Säure mit Fettsäuren partiell verestert, Luft durchleitet und anschließend mit Dimethylsulfat oder Ethylenoxid quaterniert. Auch die Herstellung fester Esterquats ist bekannt, bei der man die Quaternierung von Triethanolaminestern in Gegenwart von geeigneten Dispergatoren, vorzugsweise Fettalkoholen, durchführt.

In den Mitteln bevorzugte Esterquats sind quaternierte Fettsäuretriethanolaminestersalze, die der Formel (IV) folgen, 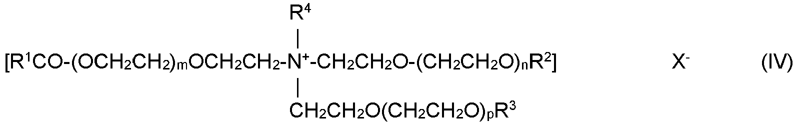 in der R¹CO für einen Acylrest mit 6 bis 22 Kohlenstoffatomen, R² und R³ unabhängig voneinander für Wasserstoff oder R¹CO, R⁴ für einen Alkylrest mit 1 bis 4 Kohlenstoffatomen oder eine (CH₂CH₂O)_{q}H-Gruppe, m, n und p in Summe für 0 oder Zahlen von 1 bis 12, q für Zahlen von 1 bis 12 und X für ein ladungsausgleichendes Anion wie Halogenid, Alkylsulfat oder Alkylphosphat steht. Typische Beispiele für Esterquats, die im Sinne der Erfindung Verwendung finden können, sind Produkte auf Basis von Capronsäure, Caprylsäure, Caprinsäure, Laurinsäure, Myristinsäure, Palmitinsäure, Isostearinsäure, Stearinsäure, Ölsäure, Elaidinsäure, Arachinsäure, Behensäure und Erucasäure sowie deren technische Mischungen, wie sie beispielsweise bei der Druckspaltung natürlicher Fette und Öle anfallen. Vorzugsweise werden technische C_{12/18}-Kokosfettsäuren und insbesondere teilgehärtete C_{16/18}-Talg- beziehungsweise Palmfettsäuren sowie elaidinsäure-reiche C_{16/18}-Fettsäureschnitte eingesetzt. Zur Herstellung der quaternierten Ester können die Fettsäuren und das Triethanolamin in der Regel im molaren Verhältnis von 1,1 : 1 bis 3 : 1 eingesetzt werden. Im Hinblick auf die anwendungstechnischen Eigenschaften der Esterquats hat sich ein Einsatzverhältnis von 1,2 : 1 bis 2,2 : 1, vorzugsweise 1,5 : 1 bis 1,9 : 1 als besonders vorteilhaft erwiesen. Die bevorzugt eingesetzten Esterquats stellen technische Mischungen von Mono-, Di- und Triestern mit einem durchschnittlichen Veresterungsgrad von 1,5 bis 1,9 dar und leiten sich von technischer C_{16/18}-Talg- bzw. Palmfettsäure (lodzahl 0 bis 40) ab. Quaternierte Fettsäuretriethanolaminestersalze der Formel (IV), in der R¹CO für einen Acylrest mit 16 bis 18 Kohlenstoffatomen, R² für R¹CO, R³ für Wasserstoff, R⁴ für eine Methylgruppe, m, n und p für 0 und X für Methylsulfat steht, haben sich als besonders vorteilhaft erwiesen.

Neben den quaternierten Carbonsäuretriethanolaminestersalzen kommen als Esterquats auch quaternierte Estersalze von Carbonsäuren mit Diethanolalkylaminen der Formel (V) in Betracht, 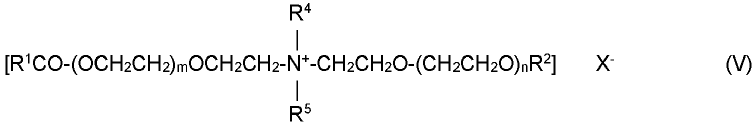 in der R¹CO für einen Acylrest mit 6 bis 22 Kohlenstoffatomen, R² für Wasserstoff oder R¹CO, R⁴ und R⁵ unabhängig voneinander für Alkylreste mit 1 bis 4 Kohlenstoffatomen, m und n in Summe für 0 oder Zahlen von 1 bis 12 und X für ein ladungsausgleichendes Anion wie Halogenid, Alkylsulfat oder Alkylphosphat steht.

Als weitere Gruppe geeigneter Esterquats sind schließlich die quaternierten Estersalze von Carbonsäuren mit 1,2-Dihydroxypropyldialkylaminen der Formel (VI) zu nennen, 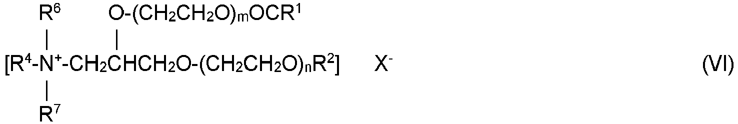 in der R¹CO für einen Acylrest mit 6 bis 22 Kohlenstoffatomen, R² für Wasserstoff oder R¹CO, R⁴, R⁶ und R⁷ unabhängig voneinander für Alkylreste mit 1 bis 4 Kohlenstoffatomen, m und n in Summe für 0 oder Zahlen von 1 bis 12 und X für ein ladungsausgleichendes Anion wie Halogenid, Alkylsulfat oder Alkylphosphat steht.

Hinsichtlich der Auswahl der bevorzugten Fettsäuren und des optimalen Veresterungsgrades gelten die für (IV) genannten beispielhaften Angaben sinngemäß auch für die Esterquats der Formeln (V) und (VI). Üblicherweise gelangen die Esterquats in Form 50 bis 90 gewichtsprozentiger alkoholischer Lösungen in den Handel, die auch problemlos mit Wasser verdünnt werden können, wobei Ethanol, Propanol und Isopropanol die üblichen alkoholischen Lösungsmittel sind.

Esterquats werden vorzugsweise in Mengen von 5 Gew.-% bis 25 Gew.-%, insbesondere 8 Gew.-% bis 20 Gew.-%, jeweils bezogen auf gesamtes Wäschenachbehandlungsmittel, verwendet. Gewünschtenfalls können die erfindungsgemäß verwendeten Wäschenachbehandlungsmittel zusätzlich oben aufgeführte Waschmittelinhaltsstoffe enthalten, sofern sie nicht in unzumutbarer Weise negativ mit dem Esterquat wechselwirken. Bevorzugt handelt es sich um ein flüssiges, wasserhaltiges Mittel.

### Beispiele

### Beispiel 1: Herstellung von N-Sulfoethylchitosan

Zu einer Suspension aus 25 g (155,3 mmol) Chitosan in 875 mL Wasser wurden 1,13 mL konzentrierte Salzsäure (9,6 mmol) hinzugegeben. Die resultierende Mischung wurde 10 Minuten bei Raumtemperatur gerührt. Im Anschluss wurden 327,7 g (1,55 mol) 2-Bromethansulfonat (Na-Salz) zugegeben und die Reaktionsmischung wurde 24 Stunden bei 70 °C gerührt und anschließend in 7 L Ethanol gegeben. Nach Filtration (G3-Fritte) wurde der feste Rückstand fünfmal mit je 1 L Ethanol gewaschen. Anschließend wurde das Produkt bei 40 °C im Vakuum getrocknet.
DS: 0,52
Ausbeute: 36,4 g
Elementaranalyse: C% 35,38; H% 6.06; N% 5,52; S% 7,30
¹³C-NMR (250 MHz, D₂O): δ (ppm) = 98,4 (C-1); 77,45 (C-4); 75,22 (C-5); 71,07 (C-3); 62,8 (C-2ₛ); 60,80 (C-6); 56,35 (C-2); 48,69 (N-CH₂-CH₂-S); 43,95 (N-CH₂-CH₂-S)

### Beispiel 2: Mittel

In Tabelle 1 ist die Zusammensetzung (Inhaltsstoffe in Gewichtsprozent, jeweils bezogen auf das gesamte Mittel) des erfindungsgemäßen Waschmittels M1 und des von einem entsprechenden Wirkstoff freien Mittels V1 sowie des an seiner Stelle ein N,O-Carboxymethylchitosan (erhalten nach Beispiel 1 a der WO 2019/243108 A1) enthaltenden Mittels V2 angegeben:

**Tabelle 1: Zusammensetzung**

| | V1 | V2 | M1 |
|---|---|---|---|
| C₉-₁₃ Alkylbenzolsulfonat, Na-Salz | 9 | 9 | 9 |
| Natriumlaurylethersulfat mit 2 EO | 3 | 3 | 3 |
| C₁₂₋₁₄-Fettalkohol mit 7 EO | 7 | 7 | 7 |
| C₁₂₋₁₈-Fettsäure, Na-Salz | 2 | 2 | 2 |
| NaOH | 0,5 | 0,5 | 0,5 |
| Citronensäure | 2 | 2 | 2 |
| 1-Hydroxyethan-1,1-diphosphonat, Na-Salz | 0,6 | 0,6 | 0,6 |
| Cellulase | - | - | - |
| Andere Enzyme, Farbstoff, opt. Aufheller, Alkohole, Borsäure, Lösemittel | 14 | 14 | 14 |
| N,O-Carboxymethylchitosan | - | 1 | - |
| Wirkstoff^{a)} | - | - | 1 |
| Wasser | auf 100 | | |

### a) N-Sulfoethylchitosan aus Beispiel 1

### Beispiel 3: Vergrauung

Mit den Mitteln V1, V2 oder M1 wurden in einer Waschmaschine Miele^{®} W 1935 (Baumwollwaschprogramm, kurz, 40 °C; Wasserhärte 16°dH; standardisierter Schmutzträger; Dosierung 52,7 g des jeweiligen Mittels pro Waschgang) Waschversuche durchgeführt. Zum Einsatz kamen neben Füllwäsche auf eine Beladung von 3,5 kg die in Tabelle 2 aufgeführten Materialien (jeweils 8 Textilstücke in der Größe 20 bzw. 40 × 40 cm) und fertig konfektionierte Textilien.

In der nachfolgenden Tabelle 2 sind die Unterschiede der Helligkeitsveränderungen (ΔΔY-Werte) der Materialien nach 5 Wäschen unter den angegebenen Bedingungen mit dem Mittel M1 oder mit dem Mittel V2 im Vergleich zu der Helligkeitsveränderung nach 5 Wäschen mit dem Mittel V1 angegeben.

**Tabelle 2: Helligkeitsveränderungsunterschiede**

| Textil / Mittel | M1 | V2 |
|---|---|---|
| WFK 12A frottier | 5,8 | 1,7 |
| Fottierhandtuch | 4,9 | 1,3 |
| EMPA 221 100% Baumwolle | 1,4 | 0,4 |
| WFK 11A 1.1.13 | 2,4 | 0,2 |
| Doppelripp-Baumwollgewebe | 2,6 | 1,9 |
| Viskose | 3,0 | 0,2 |
| 55% Polyester / 45 % Baumwolle | 3,8 | 0,8 |
| Anvil^{®} T-Shirt | 4,5 | -0,4 |
| Gerstenkorn Handtuch | 3,9 | 0,2 |
| Frottiertuch 100% Baumwolle | 3,6 | 1,8 |

Bei Einsatz des erfindungsgemäßen Mittels M1 vergrauen die Materialien signifikant weniger als bei Einsatz des Mittels V2, das einen bekannten reinigungsleistungsverstärkenden Wirkstoff enthält.

## Patentansprüche

1. Verwendung von Chitosanderivaten, die eine modifizierte Anhydroglykosideinheit der allgemeinen Formel I enthalten, 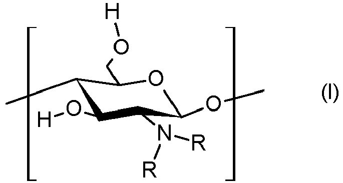 in denen die Reste R unabhängig voneinander für -H, -(CH₂)ₙCOOH, -(CH₂)ₙCOO⁻X⁺, -(CH₂)ₘSO₃H, -(CH₂)ₘSO₃⁻X⁺ stehen, n und m unabhängig voneinander für Zahlen von 1 bis 3 stehen, und X⁺ für ein ladungsausgleichendes Kation, insbesondere ein Alkalimetall- und/oder Ammoniumion steht, wobei zumindest ein Teil der Reste R nicht für -H steht-, zur Verstärkung der Reinigungsleistung gegenüber Anschmutzungen von Waschmitteln beim Waschen von Textilien.

2. Verwendung nach Anspruch 1, **dadurch gekennzeichnet, dass** die Textilien bei Anwesenheit des Wirkstoffs gewaschen und/oder nachbehandelt worden waren, bevor sie mit der Anschmutzung versehen wurden.

3. Verwendung von Chitosanderivaten, die eine modifizierte Anhydroglykosideinheit der allgemeinen Formel (I) enthalten, 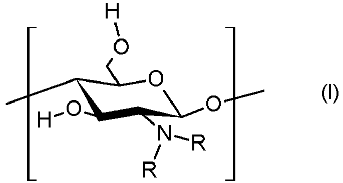 in denen die Reste R unabhängig voneinander für -H, -(CH₂)ₙCOOH, -(CH₂)ₙCOO⁻X⁺, -(CH₂)ₘSO₃H, -(CH₂)ₘSO₃⁻X⁺ stehen, n und m unabhängig voneinander für Zahlen von 1 bis 3 stehen, und X⁺ für ein ladungsausgleichendes Kation, insbesondere ein Alkalimetall- und/oder Ammoniumion steht, wobei zumindest ein Teil der Reste R nicht für -H steht-, zur Reduzierung der Vergrauung von Textilien beim Waschen.

4. Verfahren zum Waschen von Textilien, bei dem ein Waschmittel und ein Chitosanderivat, das eine modifizierte Anhydroglykosideinheit der allgemeinen Formel (I) enthält, 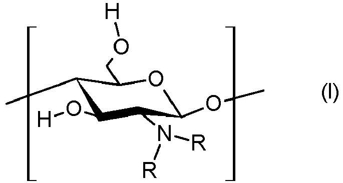 in denen die Reste R unabhängig voneinander für -H, -(CH₂)ₙCOOH, -(CH₂)ₙCOO⁻X⁺, -(CH₂)ₘSO₃H, -(CH₂)ₘSO₃⁻X⁺ stehen, n und m unabhängig voneinander für Zahlen von 1 bis 3 stehen, und X⁺ für ein ladungsausgleichendes Kation, insbesondere ein Alkalimetall- und/oder Ammoniumion steht, wobei zumindest ein Teil der Reste R nicht für -H steht-, zur Einsatz kommen.

5. Verfahren nach Anspruch 4, **dadurch gekennzeichnet, dass** die Einsatzkonzentration des Chitosanderivats in der Waschflotte 0,0001 g/l bis 1 g/l, insbesondere 0,001 g/l bis 0,2 g/l beträgt.

6. Verfahren nach Anspruch 4 oder 5, **dadurch gekennzeichnet, dass** man es unter Einsatz eines Waschmittels, enthaltend das Chitosanderivat, durchführt.

7. Verfahren zum Waschen von Textilien nach einem der Ansprüche 4 bis 6, **dadurch gekennzeichnet, dass** man es unter Einsatz eines Wäschenachbehandlungsmittels, insbesondere Weichspülmittels, enthaltend das Chitosanderivat, durchführt.

8. Wasch- oder Wäschenachbehandlungsmittel, enthaltend ein Chitosanderivat, das eine modifizierte Anhydroglykosideinheit der allgemeinen Formel I enthält, 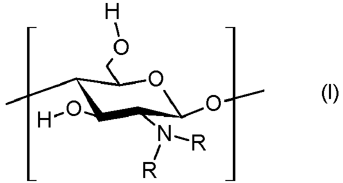 in denen die Reste R unabhängig voneinander für -H, -(CH₂)ₙCOOH, -(CH₂)ₙCOO⁻X⁺, -(CH₂)ₘSO₃H, -(CH₂)ₘSO₃⁻X⁺ stehen, n und m unabhängig voneinander für Zahlen von 1 bis 3 stehen, und X⁺ für ein ladungsausgleichendes Kation, insbesondere ein Alkalimetall- und/oder Ammoniumion steht, wobei zumindest ein Teil der Reste R nicht für -H steht.

9. Mittel nach Anspruch 8, **dadurch gekennzeichnet, dass** es das Chitosanderivat in Mengen von 0,01 Gew.-% bis 10 Gew.-%, insbesondere von 0,1 Gew.-% bis 3 Gew.-% enthält.

10. Verwendung nach einem der Ansprüche 1 bis 3, Verfahren nach einem der Ansprüche 4 bis 7, oder Mittel nach Anspruch 8 oder 9, **dadurch gekennzeichnet, dass** in der allgemeinen Formel (I) n für 1 und/oder m für 2, steht; und/oder dass der durchschnittliche Substitutionsgrad (DS) im Chitosanderivat im Bereich von 0,1 bis 1,0, insbesondere im Bereich von 0,2 bis 0,9 liegt; und/oder das durchschnittliche Molekulargewicht des Chitosanderivats im Bereich von 5000 g/mol bis 150000 g/mol, insbesondere im Bereich von 30000 g/mol bis 110000 g/mol liegt.

## Claims

1. A use of chitosan derivatives containing a modified anhydroglycoside unit of the general formula I, 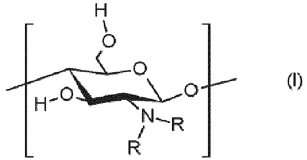 in which the groups R independently of one another represent -H, - (CH₂)ₙCOOH, -(CH₂)ₙCOO⁻X⁺, -(CH₂)ₘSO₃H, -(CH₂)ₘSO₃⁻X⁺, n and m independently of one another represent numbers from 1 to 3, and X⁺ represents a charge-balancing cation, in particular an alkali metal ion and/or ammonium ion, wherein at least a portion of the groups R does not represent -H, for enhancing the cleaning performance of washing agents with respect to soiling when washing textiles.

2. The use according to claim 1, **characterized in that** the textiles were already washed and/or post-treated in the presence of the active ingredient before they were soiled.

3. The use of chitosan derivatives containing a modified anhydroglycoside unit of the general formula (I), 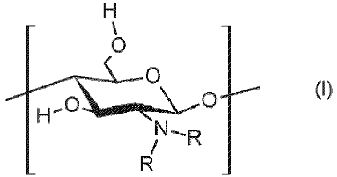 in which the groups R independently of one another represent -H, - (CH₂)ₙCOOH, -(CH₂)ₙCOO⁻X⁺, -(CH₂)ₘSO₃H, -(CH₂)ₘSO₃⁻X⁺, n and m independently of one another represent numbers from 1 to 3, and X⁺ represents a charge-balancing cation, in particular an alkali metal ion and/or ammonium ion, wherein at least a portion of the groups R does not represent -H, for reducing graying of textiles during washing.

4. A method for washing textiles, in which a washing agent and a chitosan derivative containing a modified anhydroglycoside unit of the general formula (I) are used, 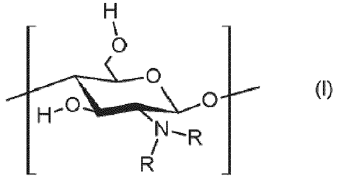 in which the groups R independently of one another represent -H, - (CH₂)ₙCOOH, -(CH₂)ₙCOO⁻X⁺, -(CH₂)ₘSO₃H, -(CH₂)ₘSO₃⁻X⁺, n and m independently of one another represent numbers from 1 to 3, and X⁺ represents a charge-balancing cation, in particular an alkali metal ion and/or ammonium ion, wherein at least a portion of the groups R does not represent -H.

5. The method according to claim 4, **characterized in that** the use concentration of the chitosan derivative in the washing liquor is 0.0001 g/l to 1 g/l, in particular 0.001 g/l to 0.2 g/l.

6. The method according to claim 4 or 5, **characterized in that** said method is carried out using a washing agent which contains the chitosan derivative.

7. The method for washing textiles according to one of claims 4 to 6, **characterized in that** said method is carried out using a laundry post-treatment agent, in particular fabric softener, which contains the chitosan derivative.

8. A washing agent or laundry post-treatment agent which contains a chitosan derivative containing a modified anhydroglycoside unit of the general formula I, 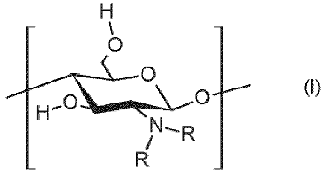 in which the groups R independently of one another represent -H, - (CH₂)ₙCOOH, -(CH₂)ₙCOO⁻X⁺, -(CH₂)ₘSO₃H, -(CH₂)ₘSO₃⁻X⁺, n and m independently of one another represent numbers from 1 to 3, and X⁺ represents a charge-balancing cation, in particular an alkali metal ion and/or ammonium ion, wherein at least a portion of the groups R does not represent -H.

9. The agent according to claim 8, **characterized in that** it contains the chitosan derivative in amounts of from 0.01 wt.% to 10 wt.%, in particular from 0.1 wt.% to 3 wt.%.

10. The use according to one of claims 1 to 3, method according to one of claims 4 to 7, or agent according to claim 8 or claim 9, **characterized in that** in the general formula (I), n represents 1 and/or m represents 2; and/or **in that** the average degree of substitution (DS) in the chitosan derivative is in the range of from 0.1 to 1.0, in particular in the range of from 0.2 to 0.9; and/or the average molecular weight of the chitosan derivative is in the range of from 5000 g/mol to 150000 g/mol, in particular in the range of from 30000 g/mol to 110000 g/mol.

## Revendications

1. Utilisation de dérivés de chitosane qui contiennent un motif anhydroglucose modifié de formule générale I, 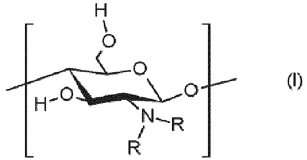 où les radicaux R représentent, indépendamment l'un de l'autre, -H, - (CH₂)ₙCOOH, -(CH₂)ₙCOO⁻X⁺, -(CH₂)ₘSO₃H, -(CH₂)ₘSO₃⁻X⁺, n et m représentent, indépendamment l'un de l'autre, des nombres de 1 à 3, et X⁺ représente un cation d'équilibrage de charge, en particulier un ion de métal alcalin et/ou d'ammonium, dans laquelle au moins une partie des radicaux R ne représentent pas -H, pour le renforcement de la performance de nettoyage contre les salissures d'agents de lavage lors du lavage de textiles.

2. Utilisation selon la revendication 1, **caractérisée en ce que** les textiles avaient été lavés et/ou traités ultérieurement en présence de la substance active avant d'avoir été pourvus de salissures.

3. Utilisation de dérivés de chitosane qui contiennent un motif anhydroglucose modifié de formule générale (I), 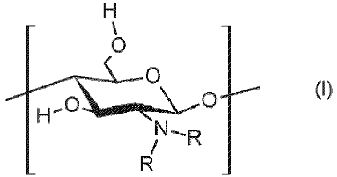 où les radicaux R représentent, indépendamment l'un de l'autre, -H, - (CH₂)ₙCOOH, -(CH₂)ₙCOO⁻X⁺, -(CH₂)ₘSO₃H, -(CH₂)ₘSO₃⁻X⁺, n et m représentent, indépendamment l'un de l'autre, des nombres de 1 à 3, et X⁺ représente un cation d'équilibrage de charge, en particulier un ion de métal alcalin et/ou d'ammonium, dans laquelle au moins une partie des radicaux R ne représentent pas -H, pour la réduction du grisaillement des textiles lors du lavage.

4. Procédé permettant le lavage de textiles, dans lequel sont utilisés un agent de lavage et un dérivé de chitosane qui contient un motif anhydroglucose modifié de formule générale (I), 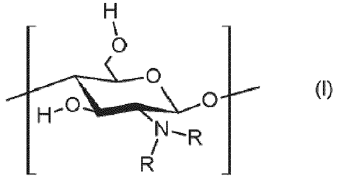 où les radicaux R représentent, indépendamment l'un de l'autre, -H, - (CH₂)ₙCOOH, -(CH₂)ₙCOO⁻X⁺, -(CH₂)ₘSO₃H, -(CH₂)ₘSO₃⁻X⁺, n et m représentent, indépendamment l'un de l'autre, des nombres de 1 à 3, et X⁺ représente un cation d'équilibrage de charge, en particulier un ion de métal alcalin et/ou d'ammonium, dans lequel au moins une partie des radicaux R ne représentent pas -H.

5. Procédé selon la revendication 4, **caractérisé en ce que** la concentration du dérivé de chitosane utilisée dans le bain de lavage va de 0,0001 g/l à 1 g/l, en particulier de 0,001 g/l à 0,2 g/l.

6. Procédé selon la revendication 4 ou 5, **caractérisé en ce qu'**il est mis en oeuvre en utilisant un agent de lavage contenant le dérivé de chitosane.

7. Procédé permettant le lavage de textiles selon l'une des revendications 4 à 6, **caractérisé en ce qu'**il est mis en oeuvre en utilisant un agent de traitement ultérieur du linge, en particulier un agent assouplissant, contenant le dérivé de chitosane.

8. Agent de lavage ou agent de traitement ultérieur du linge, contenant un dérivé de chitosane qui contient un motif anhydroglucose modifié de formule générale I, 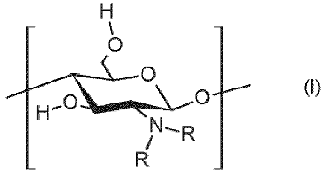 où les radicaux R représentent, indépendamment l'un de l'autre, -H, - (CH₂)ₙCOOH, -(CH₂)ₙCOO⁻X⁺, -(CH₂)ₘSO₃H, -(CH₂)ₘSO₃⁻X⁺, n et m représentent, indépendamment l'un de l'autre, des nombres de 1 à 3, et X⁺ représente un cation d'équilibrage de charge, en particulier un ion de métal alcalin et/ou d'ammonium, dans lequel au moins une partie des radicaux R ne représentent pas -H.

9. Agent selon la revendication 8, **caractérisé en ce qu'**il contient le dérivé de chitosane en des quantités allant de 0,01 % en poids à 10 % en poids, en particulier de 0,1 % en poids à 3 % en poids.

10. Utilisation selon l'une des revendications 1 à 3, procédé selon l'une des revendications 4 à 7, ou agent selon la revendication 8 ou 9, **caractérisé en ce que,** dans la formule générale (I), n représente 1 et/ou m représente 2 ; **et/ou en ce que** le degré de substitution (DS) moyen dans le dérivé de chitosane se situe dans la plage allant de 0,1 à 1,0, en particulier dans la plage allant de 0,2 à 0,9 ; **et/ou en ce que** la masse moléculaire moyenne du dérivé de chitosane se situe dans la plage allant de 5 000 g/mol à 150 000 g/mol, en particulier dans la plage allant de 30 000 g/mol à 110 000 g/mol.
